# EUROPÄISCHE PATENTANMELDUNG

(11) **EP 2 527 635 A2**
(43) Veröffentlichungstag der Anmeldung: **28.11.2012**
(21) Anmeldenummer: 12002751.1
(22) Anmeldetag: 19.04.2012
(51) Int. Cl.: F02G 5/02

(54) **Energierückgewinnungssystem**

(30) Priorität: 27.05.2011 CH 9162011
(71) Anmelder: Liebherr-Machines Bulle SA, 1630 Bulle (CH)
(72) Erfinder: Seba, Bouzid, Dr., 1636 Broc (CH); Schlager, Gerd, Dr., 4292 Kefermarkt (AT)
(74) Vertreter: Laufhütte, Dieter

(57) **Zusammenfassung**

Die vorliegende Erfindung betrifft ein Energierückgewinnungssystem zur Rückgewinnung von Energie aus der Abwärme eines Verbrennungsmotors, wobei das Energierückgewinnungssystem so aufgebaut ist, dass es die Abwärme des Verbrennungsmotors in mechanische Energie umwandelt.

## Beschreibung

Die vorliegende Erfindung betrifft ein Energierückgewinnungssystem zur Rückgewinnung von Energie aus der Abwärme eines Verbrennungsmotors.

Energierückgewinnungssysteme werden bisher üblicherweise in stationären Anwendungen wie z. B. bei der Stromerzeugung eingesetzt, um den Wirkungsgrad des Gesamtsystems zu verbessern.

Aufgabe der vorliegenden Erfindung ist es nun, ein Energierückgewinnungssystem zur Verfügung zu stellen, welches die Energieeffizienz eines Verbrennungsmotors verbessert.

Erfindungsgemäß wird diese Aufgabe durch ein Energierückgewinnungssystem gemäß Anspruch 1 gelöst. Das erfindungsgemäße Energierückgewinnungssystem zur Rückgewinnung von Energie aus der Abwärme eines Verbrennungsmotors ist dabei so aufgebaut, dass es die Abwärme des Verbrennungsmotors in mechanische Energie umwandelt. Hierdurch kann ein ebenso robustes wie effektives System zur Energierückgewinnung für einen Verbrennungsmotor umgesetzt werden. Die mechanische Energie kann dann neben der durch den Verbrennungsmotor zur Verfügung gestellten mechanischen Energie eingesetzt werden.

Vorteilhafterweise ist dabei eine Verbindungsanordnung vorgesehen, durch welche die vom Energierückgewinnungssystem erzeugte mechanische Energie in die vom Verbrennungsmotor erzeugte mechanische Energie eingekoppelt wird. Insbesondere können so der Verbindungsmotor und das Energierückgewinnungssystem den gleichen Verbraucher, insbesondere das Fahrwerk und/oder Hydraulikpumpen, mit mechanischer Energie versorgen.

Vorteilhafterweise umfasst die Verbindungsanordnung dabei ein Getriebe, durch welches eine Abtriebswelle des Energierückgewinnungssystems mit einer Abtriebswelle des Verbrennungsmotors verbunden ist. Ein solches Getriebe erlaubt eine besonders einfache Kopplung der Bewegung der Abtriebswellen von Energierückgewinnungssystem und Verbrennungsmotor. Hierdurch kann die vom Energierückgewinnungssystem erzeugte mechanische Energie problemlos in den Antriebsstrang, welcher vom Verbrennungsmotor ausgeht, eingespeist werden.

Vorteilhafterweise weist das erfindungsgemäße Energierückgewinnungssystem einen Expander auf, in welchem ein durch die Abwärme des Verbrennungsmotors erwärmtes gasförmiges Medium unter Expansion eine Abtriebswelle antreibt. Vorteilhafterweise wird die Drehbewegung der Abtriebswelle dabei mit der Drehbewegung einer Abtriebswelle des Verbrennungsmotors gekoppelt.

In einer ersten Ausführungsform ist die Abtriebswellle des Energierückgewinnungssystems dabei ohne Zwischenschaltung einer Kupplung fest an die Abtriebswelle des Verbrennungsmotors gekoppelt. Hierdurch ergibt sich ein besonders einfacher Aufbau.

In einer zweiten Ausführungsform ist die Abtriebswellle des Energierückgewinnungssystems dagegen über eine Kupplung an die Abtriebswelle des Verbrennungsmotors gekoppelt. Hierdurch kann verhindert werden, dass in Phasen, in denen das Energierückgewinnungssystem eine geringere Drehzahl aufweist als der Verbrennungsmotor, eine Schleppleistung durch das Energierückgewinnungssystem entsteht.

Vorteilhafterweise wird dabei die Kupplung anhand der Temperatur und/oder des Druckes eines im Energierückgewinnungssystems fließenden Mediums angesteuert. Vorteilhafterweise erfolgt die Ansteuerung dabei mechanisch anhand eines Thermoelementes, insbesondere aus Bi-Metall, welches weiter vorteilhaft zusätzlich mit Druck aus dem Energierückgewinnungssystem beaufschlagt wird. Insbesondere wird dabei eine Temperatur und/oder ein Druck vor einem Expander des Energierückgewinnungssystems eingesetzt. Alternativ kann die Ansteuerung auch elektronisch erfolgen.

Weiterhin kann ein erfindungsgemäßes Energierückgewinnungssystem einen Wärmetauscher und einen Expander aufweisen, wobei das Energierückgewinnungssystem so aufgebaut ist, dass ein Medium im Wärmetauscher erwärmt und im Expander zur Erzeugung von mechanischer Energie expandiert wird, wobei der Wärmetauscher mit einer Auslassseite des Motors so in Verbindung steht, dass das Medium im Wärmetauscher durch das Abgas des Motors erwärmt wird. Die hohen Temperaturen des Abgases des Motors erlauben dabei einen besonders effizienten Betrieb des Energierückgewinnungssystems.

Vorteilhafterweise fließt das Medium dabei durch einen geschlossenen Fluidkreislauf des Energierückgewinnungssystems und nimmt dabei im Wärmetauscher die Abwärme des Verbrennungsmotors auf. Der Wärmetauscher weist demnach eine erste Seite auf, durch welche das Medium fließt, und eine davon getrennte zweite Seite, durch welche vorteilhaftweise das Abgas des Motors fließt.

Vorteilhafterweise ist dabei vorgesehen, der Wärmetauscher in einem Abgasrückführungsstrang des Verbrennungsmotors angeordnet ist. Die Abgasrückführung in einem Verbrennungsmotor erfordert dabei üblicherweise ohnehin den Einsatz eines Wärmetauschers, welcher in konventionellen Verbrennungsmotoren daher unter Aufwendung von Energie betrieben werden muss. Erfindungsgemäß kann dagegen die Abwärme aus dem Abgas genutzt werden, um das Energierückgewinnungssystem anzutreiben.

Weiterhin kann vorgesehen sein, dass mehrere Wärmetauscher eingesetzt werden, die mit unterschiedlichen Bereichen des Abgassystems in Verbindung stehen. So können mehrere Wärmetauscher eingesetzt werden, welche mit unterschiedlichen Bereichen oder unterschiedlichen Strängen der Abgasrückführung verbunden sind. Ebenso kann ein Wärmetauscher im Bereich der Abgasrückführung, ein weiterer Wärmetauscher im Bereich des Abgasauslassstrangs angeordnet sein.

Weiterhin kann vorgesehen sein, dass mehrere Wärmetauscher eingesetzt werden, von denen einer mit einem Kühlkreislauf des Verbrennungsmotors in Verbindung steht. Insbesondere kann hierdurch die Abwärme des Verbrennungsmotors, welche im Kühlkreislauf abgezogen wird, zu einer Vorerwärmung des Mediums im Fluidkreislauf des Energierückgewinnungssystems eingesetzt werden.

Weiterhin kann ein erfindungsgemäßes Energierückgewinnungssystem einen Fluidkreislauf mit Wärmetauscher, Expander und Kondensator aufweisen, wobei der Kondensator über einen Kühlkreislauf des Verbrennungsmotors gekühlt wird. Hierdurch muss für das Energierückgewinnungssystem kein separater Kühlkreislauf zur Kühlung des Kondensators im Energierückgewinnungssystem eingesetzt werden.

Weiterhin vorteilhafterweise umfasst das erfindungsgemäße Energierückgewinnungssystem eine Steuerung, welche das Energierückgewinnungssystem in Abhängigkeit von einem Motorparameter ansteuert. Dies erlaubt es, den Betrieb des Energierückgewinnungssystems in Abhängigkeit vom Betriebszustand des Verbrennungsmotors anzusteuern.

Insbesondere kann vorgesehen sein, dass die Steuerung das Energierückgewinnungssystem in Abhängigkeit von einer Abgasrückführungsbetriebsweise oder einer Abgasrückführungstemperatur des Verbrennungsmotors ansteuert. Insbesondere kann hierdurch die Kühlleistung eines im Abgasrückführungsstrang angeordneten Wärmetauschers des Energierückgewinnungssystems an die gewünschte Betriebsweise des Abgasrückführungssystems oder an die gewünschte Temperatur des rückgeführten Abgases angepaßt werden.

Insbesondere kann dabei vorgesehen sein, dass das Energierückgewinnungssystem so angesteuert wird, dass die Temperatur im Abgasrückführungsstrang durch den dort angeordneten Wärmetauscher des Energierückgewinnungssystems unter einer Maximal-Temperatur gehalten wird. Beispielweise kann die Maximal-Temperatur dabei in einem Bereich zwischen 50°C und 250°C liegen, vorteilhafterweise zwischen 100°C und 200°C.

In einer Weiterbildung der vorliegenden Erfindung kann das Energierückgewinnungssystem weiterhin in Abhängigkeit von einer Ausgangsdrehzahl, einem Ausgangsdrehmoment oder einer Ausgangsleistung des Verbrennungsmotors gesteuert werden. Insbesondere wenn die Abtriebswellen von Verbrennungsmotor und Energierückgewinnungssystem miteinander gekoppelt sind, sorgt die Steuerung dabei vorteilhafterweise dafür, dass das Energierückgewinnungssystem immer so betrieben wird, dass es eine Ausgangsleistung ≥ 0 an das Gesamtsystem abgibt und nicht selbst durch den Verbrennungsmotor angetrieben wird.

Die vorliegende Erfindung umfasst weiterhin ein Energierückgewinnungssystem mit einem Fluidkreislauf mit Pumpe, Wärmetauscher und Expander, wobei das Energierückgewinnungssystem so aufgebaut ist, dass ein Medium im Wärmetauscher erwärmt und im Expander zur Erzeugung von mechanischer Energie expandiert wird. Das Energierückgewinnungssystem ist dabei durch eine Steuerung gekennzeichnet, welche das Energierückgewinnungssystem durch Ansteuerung der Pumpe in Abhängigkeit von einem oder mehreren Eingangsparametern ansteuert. Hierdurch ergibt sich eine besonders einfache Ansteuerung des Energierückgewinnungssystems. Insbesondere wird dabei die Pumprate der Pumpe in Abhängigkeit von dem einen oder mehreren Eingangsparametern angesteuert. Dabei kann es sich bei dem Fluidkreislauf um einen geschlossenen Kreislauf handeln. Weiterhin kann ein Kondensator im Fluidkreislauf vorgesehen sein.

Vorteilhafterweise steuert die Steuerung die Pumpe in Abhängigkeit von einem Signal eines im Fluidkreislauf angeordneten Sensors an. Insbesondere kann der Sensor dabei vor dem Expander im Fluidkreislauf angeordnet sein. Insbesondere kann es sich dabei um einen Drucksensor und/oder einen Temperatursensor handeln.

Insbesondere kann dabei vorgesehen sein, dass die Steuerung dabei die Temperatur und/oder den Druck im Fluidkreislauf auf eine Solltemperatur und/oder einen Solldruck regelt. In einer besonders bevorzugten Ausführungsform wird dabei die Temperatur geregelt. Beispielsweise kann die Temperatur dabei auf einen Sollwert im Bereich zwischen 200°C und 400°C geregelt werden, weiterhin vorteilhafterweise zwischen 250°C und 350°C.

Vorteilhafterweise kann weiterhin vorgesehen sein, dass die Steuerung die Pumpe wie oben bereits beschrieben in Abhängigkeit von einem Motorparameter ansteuert. Vorteilhafterweise weist die Steuerung des Energierückgewinnungssystems dabei eine Datenleitung auf, welche sie mit der Motorsteuerung verbindet. Besonders bevorzugt kann die Ansteuerung der Pumpe dabei so erfolgen, dass eine Temperatur im Abgasrückführungssystem unter einer zulässigen Maximaltemperatur bleibt.

In einer bevorzugten Ausführungsform wird die Pumpe des erfindungsgemäßen Energierückgewinnungssystems über einen Elektromotor angetrieben, welchen die Steuerung ansteuert. Hierdurch ergibt sich eine besonders einfache Ansteuerung der Pumpe und insbesondere der Pumprate.

Das soeben beschriebene Energierückgewinnungssystem mit einer Steuerung, welche die Pumpe des Energierückgewinnungssystems ansteuert, wird dabei vorteilhafterweise im Rahmen eines Energierückgewinnungssystems zur Rückgewinnung von Energie aus der Abwärme eines Verbrennungsmotors eingesetzt, wie es oben bereits beschrieben wurde. Selbstverständlich sind aber auch andere Möglichkeiten eines solchen Energierückgewinnungssystems denkbar.

Alle beschriebenen Energierückgewinnungssysteme weisen vorteilhafterweise einen Fluidkreislauf mit Pumpe, Wärmetauscher, Expander und Kondensator auf, wobei das Energierückgewinnungssystem so aufgebaut ist, dass ein Medium im Wärmetauscher erwärmt und im Expander zur Erzeugung von mechanischer Energie expandiert wird.

Als Expander kann dabei beispielweise ein Scroll, ein Kolbenexpander, ein Flügelzellenexpander oder ein Schrauben-Expander eingesetzt werden. Bevorzugt wird gemäß der vorliegenden Erfindung eine Expansionsmaschine nach dem Flügelzellenprinzip eingesetzt.

Die Pumpe sorgt dabei dafür, dass das Medium vor dem Eintritt in den Wärmetauscher unter Druck gesetzt wird. Im Wärmetauscher wird das zuvor flüssige Medium dann durch die Erwärmung gasförmig und gegebenenfalls zusätzlich noch überhitzt. Das gasförmige Medium wird dann im Expander expandiert und gibt dabei mechanische Energie ab, vorteilhafterweise an eine Abtriebswelle des Expanders.

Im nach dem Expander angeordneten Kondensator wird das Medium dann wieder verflüssigt. Gegebenenfalls kann das Energierückgewinnungssystem weiterhin einen Tank und/oder einen Filter aufweisen.

Weiterhin kann erfindungsgemäß eine Bypassleitung vorgesehen sein, durch welche der Fluidmassenstrom im Fluidkreislauf um den Expander herum geführt werden kann. Hierdurch kann verhindert werden, dass bei zu geringen Temperaturen im Wärmetauscher flüssiges Medium durch den Expander fließt. Die Ansteuerung der Bypassleitung erfolgt vorteilhafterweise anhand des Druckes und/oder der Temperatur im Fluidkreislauf nach dem Wärmetauscher.

Das Energierückgewinnungssystem wird vorteilhafterweise bei einem Verbrennungsmotor mit Innenverbrennung eingesetzt. Vorteilhafterweise weist der Verbrennungsmotor dabei einen oder mehrere Zylinder auf, in welchen Kolben durch eine Verbrennung von Kraftstoff in den Zylindern bewegt werden. Die Kolben treiben dabei wiederum eine Abtriebswelle des Verbrennungsmotors an. Insbesondere kann es sich dabei um einen Dieselmotor handeln. Vorteilhafterweise weist der Verbrennungsmotor dabei ein Abgasrückführungssystem auf.

Neben dem erfindungsgemäßen Energierückgewinnungssystem umfasst die vorliegende Erfindung weiterhin einen Verbrennungsmotor mit einem solchen Energierückgewinnungssystem.

Weiterhin umfasst die vorliegende Erfindung ein verfahrbares Arbeitsgerät und/oder ein Fahrzeug mit einem erfindungsgemäßen Verbrennungsmotor. Insbesondere kann der Verbrennungsmotor dabei als Fahrantrieb und/oder zum Antrieb einer Hydraulik für das verfahrbare Arbeitsgerät und/oder Fahrzeug dienen.

Die vorliegende Erfindung umfasst weiterhin ein Verfahren zum Betrieb eines Energierückgewinnungssystems, wie es oben beschrieben wurde, bei welchem Abwärme des Verbrennungsmotors in mechanische Energie umgewandelt wird.

Vorteilhafterweise arbeitet das erfindungsgemäße Energierückgewinnungssystem dabei nach dem Clausius-Rankine-Prinzip.

Die vorliegende Erfindung wird nun anhand von Ausführungsbeispielen sowie Zeichnungen näher erläutert. Dabei zeigen:
- Figur 1:: eine Prinzipdarstellung eines Energierückgewinnungssystems zur Rückgewinnung von Energie aus Abwärme,
- Figur 2:: ein pV-Diagramm des Clausius-Rankine-Prinzips, nach welchem das Ausführungsbeispiel des erfindungsgemäßen Energierückgewinnungssystems arbeitet,
- Figur 3:: eine Prinzipdarstellung eines ersten Ausführungsbeispiels eines an einen Verbrennungsmotor gekoppelten Energierückgewinnungssystems gemäß der vorliegenden Erfindung,
- Figur 4:: eine Prinzipdarstellung eines zweiten Ausführungsbeispiels eines an einen Verbrennungsmotor gekoppelten Energierückgewinnungssystems gemäß der vorliegenden Erfindung, bei welchem eine Kupplung vorgesehen ist,
- Figur 5:: eine Prinzipdarstellung einer Kupplung, wie sie im in Fig. 4 gezeigten zweiten Ausführungsbeispiel zum Einsatz kommen kann, sowie ihrer mechanischen Ansteuerung,
- Figur 6:: eine Prinzipdarstellung der Ansteuerung eines erfindungsgemäßen Energierückgewinnungssystems über die Pumpe des Fluidkreislaufes und
- Figur 7:: eine alternative Ausführung des in Fig. 6 gezeigten Fluidkreislaufes, in welcher ein Bypass für den Expander vorgesehen ist.

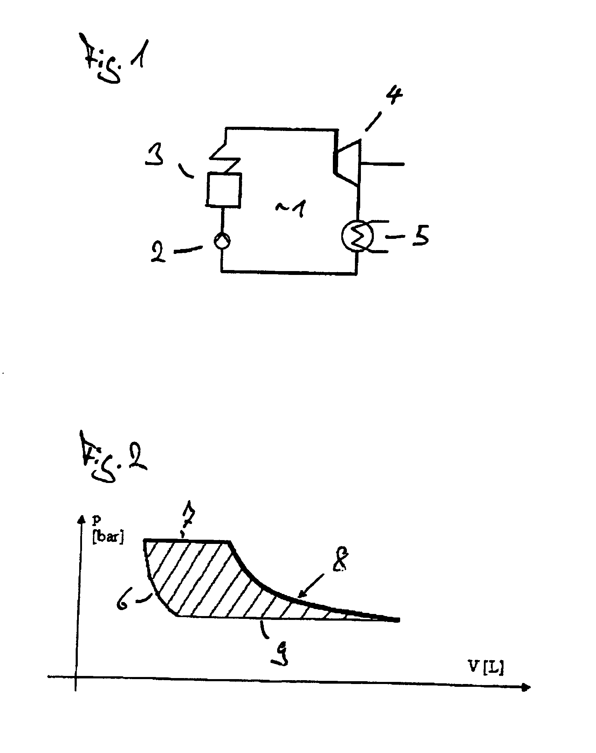

Figur 1 zeigt eine Prinzipdarstellung eines Energierückgewinnungssystems gemäß der vorliegenden Erfindung, welches Abwärme in mechanische Bewegung umwandelt. Hierfür ist ein Fluidkreislauf 1 vorgesehen, in welchem ein Medium strömt, das in einem Wärmetauscher 3 die Abwärme aufnimmt und hierdurch in den gasförmigen Zustand wechselt. Das gasförmige Medium expandiert dann im Expander 4 unter Abgabe von mechanischer Energie.

Im Kreislauf ist weiterhin ein Kondensator 5 vorgesehen, in welchem das gasförmige Medium rekondensiert. Weiterhin ist eine Pumpe 2 vorgesehen, welche den Druck des Mediums vor Eintritt in den Wärmetauscher 3 erhöht und für die Zirkulation des Mediums im Fluidkreislauf sorgt.

Zusätzlich kann gegebenenfalls noch ein Tank und ein Filter im Fluidkreislauf vorgesehen sein, welche in Figur 1 jedoch nicht eingezeichnet wurden.

Gegebenenfalls kann die in Figur 1 gezeigte Anordnung noch um einen weiteren, zwischen der Pumpe 2 und dem Wärmetauscher 3 angeordneten Wärmetauscher erweitert werden, dessen zweite Seite in der Rückleitung zwischen Expander 4 und Kondensator 5 angeordnet ist und dass durch die Pumpe 2 bedruckte Fluid unter Nutzung der Restwärme aus dem expandierten Medium vorwärmt.

In Figur 2 ist ein pV-Diagramm des Clausius-Rankine-Prinzips dargestellt, nach welchem das in Figur 1 gezeigte Energierückgewinnungssystem arbeitet. Das Medium wird zunächst entlang der Linie 6 in der Pumpe bedruckt, bevor es entlang der Linie 7 im Wärmetauscher 3 bei im wesentlichen gleichbleibenden Druck erwärmt und dabei vergast wird. An die Vergasung kann sich weiterhin eine Phase der Überhitzung des Mediums anschließen. Daraufhin wird das Gas entlang der Linie 8 im Expander 4 expandiert. Schließlich wird das gasförmige Medium entlang der Linie 9 im Kondensator rekondensiert.

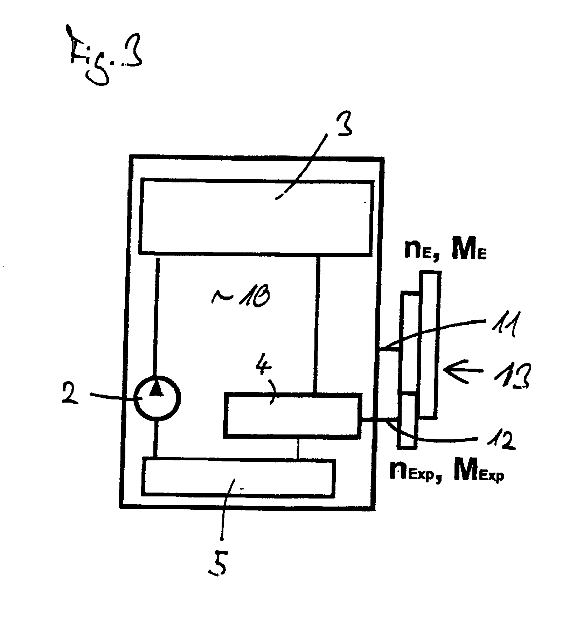

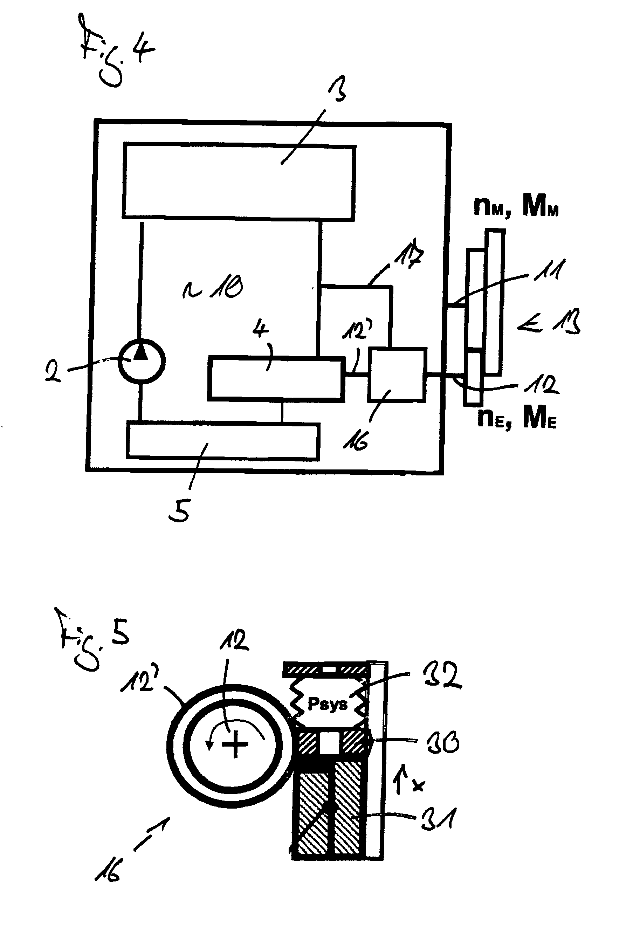

Figur 3 zeigt nun ein Ausführungsbeispiel eines ersten Aspekts der vorliegenden Erfindung, gemäß welchem das Energierückgewinnungssystem die Abwärme eines Verbrennungsmotors 10 in mechanische Energie umwandelt. Dabei kann ein Energierückgewinnungssystem eingesetzt werden, wie es in Figuren 2 und 4 bereits dargestellt wurde.

Die Abwärme des Verbrennungsmotors erwärmt dabei im Wärmetauscher 3 ein Medium im Fluidkreislauf des Energierückgewinnungssystems, dessen Energie dann im Expander 4 in mechanische Energie umgewandelt wird. Der Wärmetauscher 4 weist dabei eine Abtriebswelle 12 auf, welche durch die Abwärme mit einer Drehzahl n_{Exp} und einem Drehmoment M_{Exp} angetrieben wird.

Weiterhin ist vorgesehen, dass die so vom Energierückgewinnungssystem erzeugte mechanische Energie in die vom Verbrennungsmotor erzeugte mechanische Energie eingekoppelt wird. Der Verbrennungsmotor 10 weist dabei eine Abtriebswelle 11 auf, welche durch die Verbrennung von Kraftstoff im Verbrennungsmotor mit einer Drehzahl n_{E} und einem Drehmoment M_{E} angetrieben wird. Erfindungsgemäß sind die beiden Abtriebswellen des Energierückgewinnungssystems und des Verbrennungsmotors über ein Getriebe 13 gekoppelt. Die vom Energierückgewinnungssystem erzeugte mechanische Energie steht so zusätzlich zur vom Verbrennungsmotor erzeugten mechanischen Energie einem Verbraucher des Verbrennungsmotors zur Verfügung, insbesondere dem Antriebsstrang und/oder einer Hydraulikpumpe.

Der Wärmetauscher 3 des Energierückgewinnungssystems ist weiterhin mit der Auslassseite des Motors gekoppelt, so dass das Medium im Fluidkreislauf des Energierückgewinnungssystems durch das Abgas des Motors erwärmt wird. In einer besonders bevorzugten Ausführungsform ist der Wärmetauscher 3 dabei im Abgasrückführungsstrang des Verbrennungsmotors angeordnet. Der Wärmetauscher 3 dient damit zu Kühlung des Abgases im AGR-Strang des Verbrennungsmotors, wobei die hierbei dem Abgas entzogene Wärmeenergie nun im Energierückgewinnungssystem zur Erzeugung von mechanischer Energie genutzt werden kann.

Alternativ könnte der Wärmetauscher 3 auch im normalen Abgasauslassstrang des Verbrennungsmotors angeordnet sein. Weiterhin ist denkbar, zwei Wärmetauscher einzusetzen, wobei der eine im AGR-System und der andere im normalen Abgasauslassstrang angeordnet ist. Ebenso ist es denkbar, zur Vorerwärmung des Mediums einen weiteren Wärmetauscher vorzusehen, welcher die Abwärme des Kühlungssystems des Verbrennungsmotors nutzt.

Der Kondensator 5 des Energierückgewinnungssystems wird weiterhin erfindungsgemäß durch den Kühlkreislauf des Verbrennungsmotors gekühlt. Hierdurch muss für das Energierückgewinnungssystem kein separater Kühlkreislauf zur Kühlung des Mediums im Kondensator 5 vorgesehen werden.

Die Verwendung des Energierückgewinnungssystems zur Nutzung der Abwärme des Verbrennungsmotors kann es erforderlich machen, das Energierückgewinnungssystem in Abhängigkeit von dem Betriebszustand des Verbrennungsmotors zu steuern.

Gemäß einer bevorzugten Ausführung wird dabei die Kühlleistung des Energierückgewinnungssystems durch den Wärmetauscher 8 in Abhängigkeit von einem Betriebsparameter des AGR-Betriebs des Verbrennungsmotors angesteuert. Insbesondere kann dabei vorgesehen sein, dass die Temperatur im AGR-System durch den Wärmetauscher 8 unter einer maximal zulässigen Temperatur von bsw. 150°C gehalten wird.

In einer Weiterbildung der Erfindung könnte das Energierückgewinnungssystem ggf. auch so angesteuert werden, dass der Expander 4 mit einer Drehzahl bzw. einem Drehmoment arbeitet, welches den Verbrennungsmotor unterstützt. Durch eine entsprechende Ansteuerung kann dabei verhindert werden, dass der Expander 4 selbst zur Schlepplast wird, welche durch den Verbrennungsmotor 10 angetrieben werden müsste. Die Steuerung des Energierückgewinnungssystems kann hierfür mit der Steuerung des Verbrennungsmotors in Verbindung stehen.

Im in Fig. 3 dargestellten Ausführungsbeispiel ist die Abtriebswelle des Energierückgewinnungssystems ohne eine Kupplung mit der Abtriebswelle des Verbrennungsmotors verbunden. In diesem Fall muss ggf. hingenommen werden, dass der Verbrennungsmotor z.B. während einer Startphase, in der die Wärmemenge zum Betrieb des Energierückgewinnungssystems noch gering ist, den Expander antreibt, so dass eine Schleppleistung entsteht.

In dem in Fig. 4 gezeigten alternativen Ausführungsbeispiel ist die Abtriebswelle 12' des Energierückgewinnungssystems dagegen über eine Kupplung 16 mit der Abtriebswelle 11 des Verbrennungsmotors verbunden. Diese Kupplung 16 wird dabei in Abhängigkeit von der Temperatur und/oder dem Druck im Fluidkreislauf 1 vor dem Expander angesteuert. Hierfür ist in Fig. 4 die Steuerleitung 17 vorgesehen.

Bei dem in Fig. 5 gezeigten Funktionsprinzip erfolgt die Ansteuerung der Kupplung 16 dabei mechanisch. Die Kupplung 16 verbindet die symbolisch dargestellten Wellen 12' und 12, wenn der Hebel 30 in Richtung x bewegt wird, und schaltet auf Freilauf, wenn der Hebel 30 in Gegenrichtung bewegt wird. Als Kupplung kann dabei jede konventionelle mechanisch ansteuerbare Kupplung vorgesehen werden.

Zur Ansteuerung der Kupplung 16 ist dabei ein Thermoelement 31 vorgesehen, welches sich bei Erwärmung ausdehnt und dabei den Hebel 30 in Richtung x bewegt. Das Thermoelement ist hierfür thermisch an den Fluidkreislauf gekoppelt. Bei ausreichend hoher Temperatur im Fluidkreislauf wird daher die Kupplung geschlossen.

Die Kupplung wird zudem mit dem Druck aus dem Fluidkreislauf angesteuert. Hierfür ist eine Druckkammer 32 vorgesehen ist, welche mit dem Systemdruck Psys beaufschlagt wird und sich bei steigendem Druck ausdehnt. Die Ausdehnung der Druckkammer bewirkt dabei eine Bewegung des Hebels 30 in Gegenrichtung und wirkt damit einer Bewegung durch das Thermoelement bei steigender Temperatur entgegen. Hierdurch wird erreicht, dass die Kupplung bei einem höheren Systemdruck erst bei höheren Temperaturen schließt als bei niedrigerem Systemdruck.

Alternativ könnte die gleiche Ansteuerung auch elektronisch realisiert werden, indem eine Steuerung Sensordaten von einem Temperatursensor und/oder einem Drucksensor auswertet und eine Kupplung entsprechend ansteuert. Auch hier kann die Ansteuerung so erfolgen, dass bei ausreichend hoher Temperatur im Fluidkreislauf die Kupplung geschlossen wird. Ebenso kann vorgesehen sein, dass die Kupplung bei einem höheren Systemdruck erst bei höheren Temperaturen schließt als bei niedrigerem Systemdruck.

Erfindungsgemäß kann damit eine Trennung des Energierückgewinnungssystems vom Verbrennungsmotor bewirkt werden, wenn die Temperatur und/oder der Druck nicht ausreichen, um den Verbrennungsmotor zu unterstützen. Vorteilhafterweis.

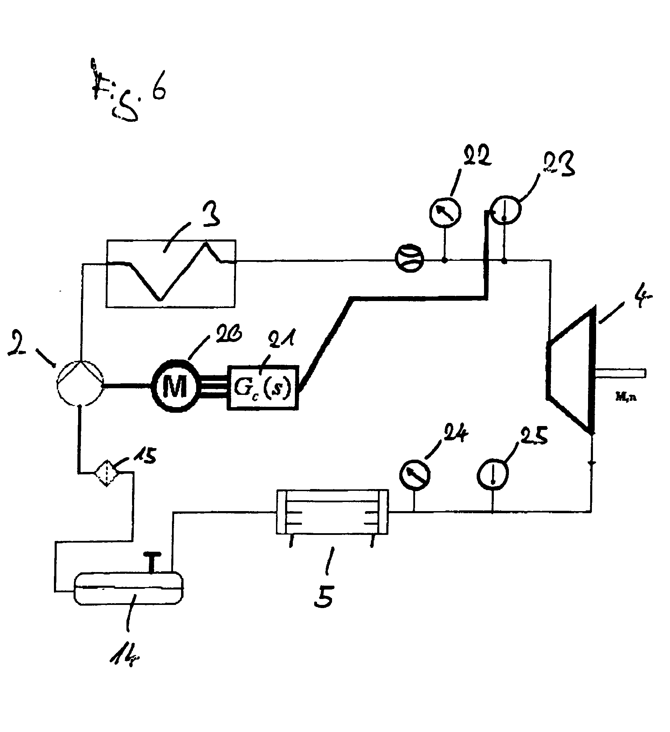

Figur 6 zeigt nun ein Ausführungsbeispiel eines zweiten Aspekts der vorliegenden Erfindung. Das Energierückgewinnungssystem kann dabei wiederum die bereits im Hinblick auf Figur 1 beschriebenen Komponenten aufweisen. Als optionale Komponenten sind in Fig. 4 noch der im Fluidkreislauf angeordnete Tank 14 sowie ein Filter 15 dargestellt.

Erfindungsgemäß erfolgt nun die Ansteuerung des Energierückgewinnungssystems über die Ansteuerung der Pumpe 2. Im Ausführungsbeispiel wird die Pumpe 2 dabei über einen Elektromotor 20 angetrieben, welcher durch eine Steuerung 21 angesteuert wird. Die Ansteuerung des Energierückgewinnungssystems erfolgt damit gemäß dem zweiten Aspekt der vorliegenden Erfindung über den Fluidmassenstrom im Fluidkreislauf.

In die Steuerung 21 fließen dabei Messwerte eines Sensors 23 ein, welcher im Fluidkreislauf des Energierückgewinnungssystems angeordnet ist. Im Ausführungsbeispiel handelt es sich bei dem Sensoren 23 dabei um einen Temperatursensor, welcher in der Fluidleitung vor dem Expander 4 angeordnet ist. Alternativ oder zusätzlich können aber auch Sensordaten des vor dem Expander 4 angeordneten Drucksensors 22 oder der Sensoren 24 und 25 ausgewertet werden, welche im Fluidkreislauf nach dem Expander 4 angeordnet sind. Auch bei den Sensoren 24 und 25 kann es sich dabei um Temperatur- und/oder Drucksensoren handeln.

Erfindungsgemäß wird nun die Pumprate der Pumpe 2 über die Steuerung 21 anhand der Sensordaten angesteuert, um so die Temperatur des Mediums am Eingang des Expanders 4 zu regeln. Im Ausführungsbeispiel wird die Temperatur dabei auf 300°C geregelt.

Alternativ könnte auch eine andere Regelgröße herangezogen werden, welche aus den Sensordaten ermittelt wird. Weiterhin kann vorgesehen sein, dass die Pumpe 20 mit einer vorgegebenen minimalen Pumprate betrieben wird, wenn keine ausreichend hohe Temperaturen im Wärmetauscher vorliegen, um die gewünschte Temperatur im Fluidkreislauf zu erreichen, z.B. bei Systemstart.

Der Druck im Fluidkreislauf des Energierückgewinnungssystems am Eingang des Expanders kann dabei abhängig vom Fluidmassenstrom im Ausführungsbeispiel zwischen 10 und 40 bar betragen. Die Temperaturerhöhung im Wärmetauscher 3 kann beispielsweise von ca. weniger als 80°C auf mehr als 250°C betragen.

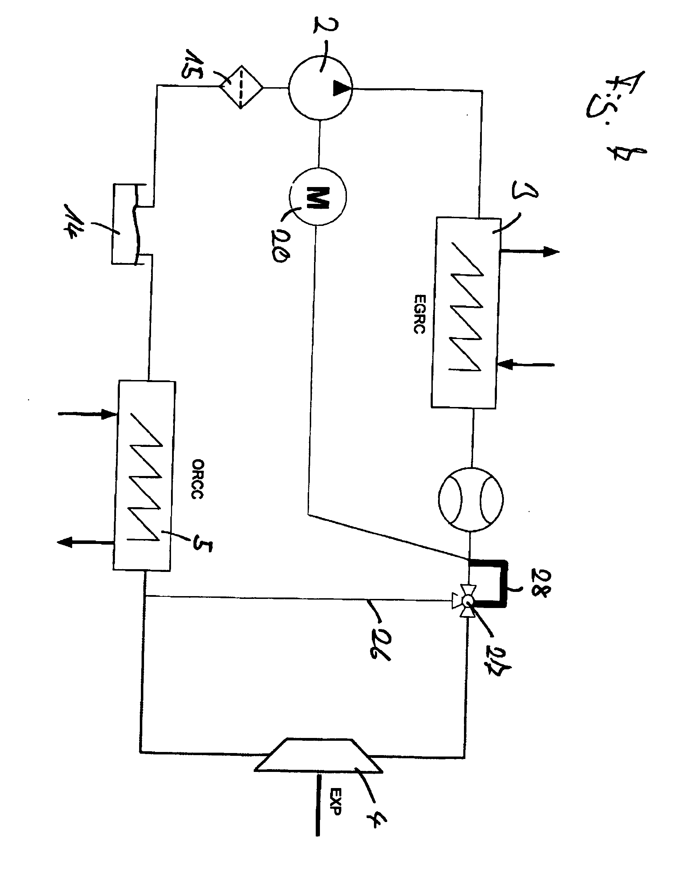

Bei dem in Fig. 7 gezeigten abgewandelten Energierückgewinnungssystem ist zusätzlich zu den in Fig. 6 dargestellten Komponenten eine Bypassleitung 26 vorgesehen, durch welche der Fluidmassenstrom im Fluidkreislauf um den Expander 4 herum geführt werden kann. Hierfür ist eine Ventilanordnung 27 vorgesehen, welche über die Steuerung 28 in Abhängigkeit von Temperatur und/oder Druck im Fluidkreislauf nach dem Wärmetauscher 3 den Fluidmassenstrom entweder durch den Expander 4 oder den Bypass 26 leitet. Die Ansteuerung verhindert dabei, dass das Medium, wenn die Temperatur im Wärmetauscher 3 nicht zur Verdampfung ausreicht, als Flüssigkeit in den Expander fließt. Diese Situation kann insbesondere beim Start des Systems auftreten.

Weiterhin kann eine zusätzliche Bypassleitung, welche den Expander 4 kurzschließt, oder eine Entlüftung vorgesehen sein, welche verhindert, dass der Expander 4 eine hohe Schleppleistung erzeugt.

Die in Figuren 3 bzw. 4 und 6 bzw. 7 gezeigten beiden Aspekte der vorliegenden Erfindung werden dabei in einem besonders bevorzugten Ausführungsbeispiel miteinander kombiniert.

Insbesondere wird dabei die in Figur 6 oder 7 gezeigte Ansteuerung des Energierückgewinnungssystems bei dem in Figur 3 oder 4 gezeigten mit einem Verbrennungsmotor kombinierten Energierückgewinnungssystem eingesetzt.

In diesem Fall können in die Steuerung 21 des Energierückgewinnungssystems weiterhin Signale der Steuerung des Verbrennungsmotors eingehen. Insbesondere können dabei Daten der Verbrennungsmotorsteuerung in die Regelung eingehen. Insbesondere kann dabei der Fluidmassenstrom erhöht werden, wenn die Temperatur im AGR-System über einen maximal zulässigen Wert steigt.

Das erfindungsgemäße Energierückgewinnungssystem kann bsp. in einem verfahrbaren Arbeitsgerät und/oder einem Fahrzeug eingesetzt werden, insbesondere um die Abwärme eines Verbrennungsmotors zu nutzen. Der Verbrennungsmotor kann dabei als Fahrantrieb und/oder zum Antrieb einer Hydraulik eingesetzt werden.

## Patentansprüche

1. Energierückgewinnungssystem zur Rückgewinnung von Energie aus der Abwärme eines Verbrennungsmotors (10),
**dadurch gekennzeichnet,**
**dass** das Energierückgewinnungssystem (1) so aufgebaut ist, dass es die Abwärme des Verbrennungsmotors (10) in mechanische Energie umwandelt.

2. Energierückgewinnungssystem nach Anspruch 1, wobei eine Verbindungsanordnung (13) vorgesehen ist, durch welche die vom Energierückgewinnungssystem (1) erzeugte mechanische Energie in die vom Verbrennungsmotor (10) erzeugte mechanische Energie eingekoppelt wird.

3. Energierückgewinnungssystem nach Anspruch 2, wobei die Verbindungsanordnung (13) ein Getriebe umfasst, durch welches eine Abtriebswelle (12) des Energierückgewinnungssystems mit einer Abtriebswelle (11) des Verbrennungsmotors verbunden ist und/oder wobei ein Expander (4) vorgesehen ist, in welchem ein durch die Abwärme des Verbrennungsmotors erwärmtes gasförmiges Medium unter Expansion eine Abtriebswelle (12) antreibt.

4. Energierückgewinnungssystem nach Anspruch 2 oder 3, wobei eine Abtriebswellle des Energierückgewinnungssystems über eine Kupplung (16) an eine Abtriebswelle des Verbrennungsmotors gekoppelt ist, wobei die Kupplung vorteilhafterweise anhand eines Druckes und/oder einer Temperatur im Energierückgewinnungssystem (1) angesteuert wird.

5. Energierückgewinnungssystem nach einem der vorangegangenen Ansprüche mit einem Wärmetauscher (3) und einem Expander (4), wobei das Energierückgewinnungssystem so aufgebaut ist, dass ein Medium im Wärmetauscher (3) erwärmt und im Expander (4) zur Erzeugung von mechanischer Energie expandiert wird, wobei der Wärmetauscher mit einer Auslassseite des Verbrennungsmotors (10) so in Verbindung steht, dass das Medium im Wärmetauscher (3) durch das Abgas des Verbrennungsmotors erwärmt wird.

6. Energierückgewinnungssystem nach Anspruch 5, wobei der Wärmetauscher (4) in einem Abgasrückführungsstrang des Verbrennungsmotors angeordnet ist.

7. Energierückgewinnungssystem nach Anspruch 5 oder 6, wobei mehrere Wärmetauscher vorgesehen sind, die mit unterschiedlichen Bereichen des Abgassystems in Verbindung stehen und/oder von denen einer mit einem Kühlkreislauf des Verbrennungsmotors in Verbindung steht.

8. Energierückgewinnungssystem nach einem der vorangegangenen Ansprüche, mit einem Fluidkreislauf mit Wärmetauscher (3), Expander (4) und Kondensator (5), wobei der Kondensator (5) über einen Kühlkreislauf des Verbrennungsmotors (10) gekühlt wird.

9. Energierückgewinnungssystem nach einem der vorangegangenen Ansprüche, mit einer Steuerung (21), welche das Energierückgewinnungssystem in Abhängigkeit von einem Motorparameter ansteuert.

10. Energierückgewinnungssystem mit einem Fluidkreislauf mit Pumpe (2), Wärmetauscher (3) und Expander (4) aufweist, wobei das Energierückgewinnungssystem so aufgebaut ist, dass ein Medium im Wärmetauscher (3) erwärmt und im Expander (4) zur Erzeugung von mechanischer Energie expandiert wird,
**gekennzeichnet durch**
eine Steuerung (21), welche das Energierückgewinnungssystem **durch** Ansteuerung der Pumpe (2) in Abhängigkeit von einem oder mehreren Eingangsparametern ansteuert.

11. Energierückgewinnungssystem nach Anspruch 10, wobei die Steuerung (21) die Pumpe (2) in Abhängigkeit von einem Signal eines insbesondere vor dem Expander im Fluidkreislauf angeordneten Sensors (23) ansteuert und/oder wobei die Steuerung die Pumpe in Abhängigkeit von einem Motorparameter ansteuert und/oder wobei die Pumpe über einen Elektromotor (20) angetrieben wird, welchen die Steuerung (21) ansteuert.

12. Energierückgewinnungssystem nach einem der vorangegangenen Ansprüche, mit einer Bypassleitung, durch welche der Fluidmassenstrom im Fluidkreislauf um den Expander herum geführt werden kann.

13. Verbrennungsmotor (10) mit einem Energierückgewinnungssystem (1) nach einem der vorangegangenen Ansprüche.

14. Verfahrbares Arbeitsgerät und/oder Fahrzeug mit einem Verbrennungsmotor (10) nach Anspruch 13, insbesondere als Fahrantrieb.

15. Verfahren zum Betrieb eines Energierückgewinnungssystem nach einem der vorangegangenen Ansprüche, bei welchem Abwärme des Verbrennungsmotors (10) in mechanische Energie umgewandelt wird, wobei das Energierückgewinnungssystem vorteilhafterweise nach dem Clausius-Rankine-Prinzip arbeitet.
